# EUROPEAN PATENT APPLICATION

(11) **EP 3 839 095 A1**
(43) Date of publication of application: **23.06.2021**
(21) Application number: 20215985.1
(22) Date of filing: 21.12.2020
(51) Int. Cl.: C23C 28/02, C23C 28/00, C25D 5/50, C25D 7/00, C25D 15/00, C23C 24/04, C23C 24/06, C23C 24/08

(54) **BARRIER TO PREVENT SUPER ALLOY DEPLETION INTO NICKEL-CBN BLADE TIP COATING**

(30) Priority: 19.12.2019 US 201916720847
(71) Applicant: Raytheon Technologies Corporation, Farmington, CT 06032 (US)
(72) Inventor: JIN, Lei, Unionville, MA Massachusetts 06085 (US); JOOST, William J., Worcester, MA Massachusetts 01604 (US); BRODEUR, Ryan M., Southwick, MA Massachusetts 01077 (US)
(74) Representative: Dehns

(57) **Abstract**

A diffusion barrier coating on a nickel-based alloy substrate (54) comprising a diffusion barrier (58) being coupled to the substrate (54) between the substrate (54) and a composite material (56) opposite the substrate (54), wherein the diffusion barrier (58) comprises a nickel cobalt and chromium-aluminum-yttria powder material (66).

## Description

### BACKGROUND

The present disclosure is directed to a barrier layer for integrally bladed rotor tip Nickel-Cubic Boron Nitride (Ni-CBN) plating.

In certain gas turbine engines, the nickel integrally bladed rotor is suffering lost life time of the tip Ni-CBN coating. Elements of the base super alloy diffuse from the base super alloy into the Ni-CBN layer after engine run or heat treatment. Elements such as Cr and Al diffuse from the base super alloy into the Ni-CBN coating layer.

As a result of the diffusion of the elements from the base super alloy and the propensity of these elements to oxidize during engine operation, oxides form along surfaces and grain boundaries within the coating. These oxides reduce the strength of the coating causing loss of CBN particles and recession of the coating.

What is needed is a technique to diminish the diffusion and subsequent nickel alloy depletion.

### SUMMARY

In accordance with the present disclosure, there is provided a diffusion barrier coating on a nickel-based alloy substrate comprising the diffusion barrier coupled to the substrate between the substrate and a composite material opposite the substrate, wherein the diffusion barrier comprises a nickel cobalt and chromium-aluminum-yttria powder material.

In an optional embodiment, the nickel cobalt and chromium-aluminum-yttria powder material comprises a layered coating structure.

In an optional embodiment, the diffusion barrier consists of plated layers.

In an optional embodiment, the layered coating includes multiple layers.

In an optional embodiment, the composite material comprises a nickel-cubic boron nitride material.

In an optional embodiment, the diffusion barrier comprises a bond coat between the substrate and the composite material.

In an optional embodiment, the diffusion barrier comprises a nickel strike layer between the substrate and the diffusion barrier.

In accordance with the present disclosure, there is provided a gas turbine engine component comprising a compressor integrally bladed rotor having a blade with an airfoil section and a tip having a substrate; a diffusion barrier coupled to the substrate between the substrate and a composite material opposite the substrate, wherein the diffusion barrier comprises a nickel cobalt and chromium-aluminum-yttria powder material.

In an optional embodiment, the nickel cobalt and chromium-aluminum-yttria powder material comprises a bond layer.

In an optional embodiment, the diffusion barrier includes multiple layers.

In an optional embodiment, the diffusion barrier comprises a nickel strike layer between the substrate and the diffusion barrier.

In an optional embodiment, the substrate comprises a nickel-based alloy.

In an optional embodiment, the integrally bladed rotor is located in a high pressure compressor section of the gas turbine engine.

In accordance with the present disclosure, there is provided a process for diffusion inhibition in a nickel-based alloy substrate of a gas turbine engine component comprising applying a diffusion barrier coupled to the substrate, wherein the diffusion barrier comprises a nickel cobalt and chromium-aluminum-yttria powder material; coating the diffusion barrier with a matrix composite; and subjecting the gas turbine engine component with nickel-based alloy substrate to at least one of a heat treatment and an engine operation.

In an optional embodiment, the process further comprises coating the nickel cobalt and chromium-aluminum-yttria powder material coating comprises a bond coat.

In an optional embodiment, the diffusion barrier includes multiple layers.

In an optional embodiment, the diffusion barrier comprises a nickel CBN tack layer.

In an optional embodiment, the process further comprises plating the diffusion barrier in layers.

In an optional embodiment, the matrix composite material comprises a nickel-cubic boron nitride material.

In an optional embodiment, the process further comprises preventing Cr, Al, and Ti depletion from the nickel-based alloy substrate by reducing diffusion between the nickel-based alloy substrate and the matrix composite with the diffusion barrier.

Other details of the diffusion barrier are set forth in the following detailed description and the accompanying drawings wherein like reference numerals depict like elements.

### BRIEF DESCRIPTION OF THE DRAWINGS

FIG. 1 is a simplified cross-sectional view of a gas turbine engine.
Fig. 2 is a cross sectional schematic of an exemplary coating system.

### DETAILED DESCRIPTION

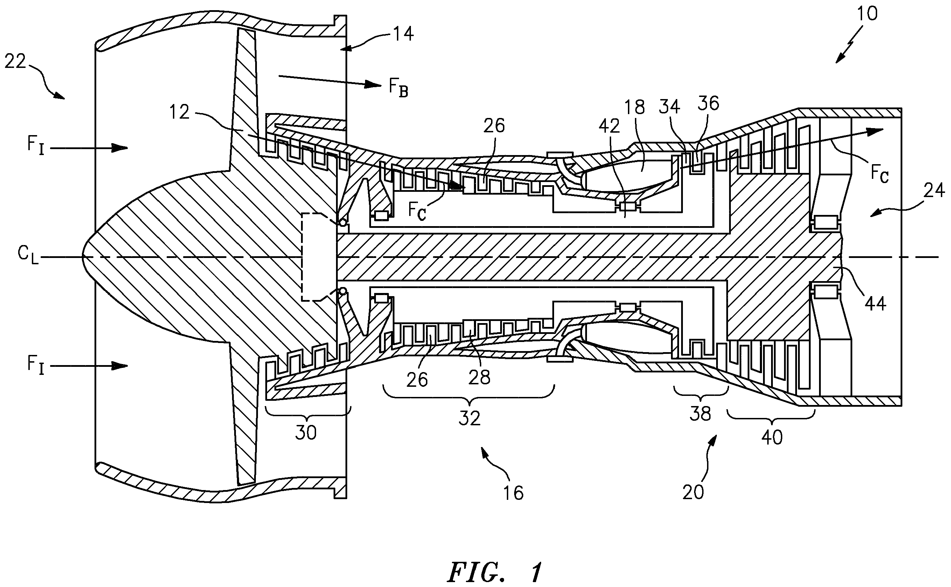

FIG. 1 is a simplified cross-sectional view of a gas turbine engine 10 in accordance with embodiments of the present disclosure. Turbine engine 10 includes fan 12 positioned in bypass duct 14. Turbine engine 10 also includes compressor section 16, combustor (or combustors) 18, and turbine section 20 arranged in a flow series with upstream inlet 22 and downstream exhaust 24. During the operation of turbine engine 10, incoming airflow F₁ enters inlet 22 and divides into core flow F_{C} and bypass flow F_{B}, downstream of fan 12. Core flow F_{C} continues along the core flowpath through compressor section 16, combustor 18, and turbine section 20, and bypass flow F_{B} proceeds along the bypass flowpath through bypass duct 14.

Compressor 16 includes stages of compressor vanes 26 and blades 28 arranged in low pressure compressor (LPC) section 30 and high pressure compressor (HPC) section 32. Turbine section 20 includes stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool. LPT section 40 is coupled to LPC section 30 and fan 12 via LPT shaft 44, forming the low pressure spool. HPT shaft 42 and LPT shaft 44 are typically coaxially mounted, with the high and low pressure spools independently rotating about turbine axis (centerline) C_{L}.

Combustion gas exits combustor 18 and enters HPT section 38 of turbine 20, encountering turbine vanes 34 and turbines blades 36. Turbine vanes 34 turn and accelerate the flow of combustion gas, and turbine blades 36 generate lift for conversion to rotational energy via HPT shaft 42, driving HPC section 32 of compressor 16. Partially expanded combustion gas flows from HPT section 38 to LPT section 40, driving LPC section 30 and fan 12 via LPT shaft 44. Exhaust flow exits LPT section 40 and turbine engine 10 via exhaust nozzle 24. In this manner, the thermodynamic efficiency of turbine engine 10 is tied to the overall pressure ratio (OPR), as defined between the delivery pressure at inlet 22 and the compressed air pressure entering combustor 18 from compressor section 16. As discussed above, a higher OPR offers increased efficiency and improved performance. It will be appreciated that various other types of turbine engines can be used in accordance with the embodiments of the present disclosure.

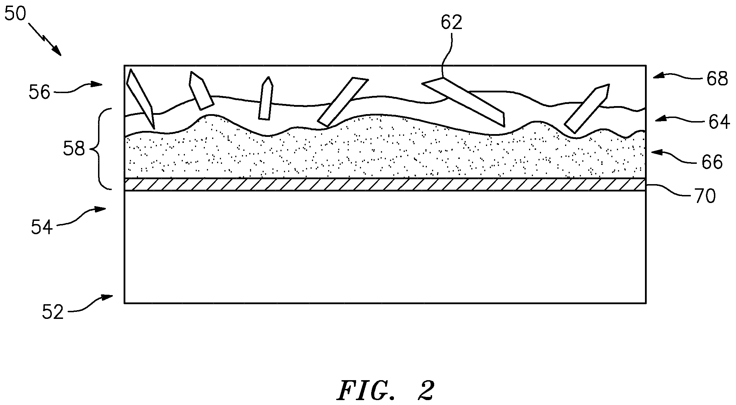

Referring now to Fig. 2, there is illustrated a turbine engine component 50, such as a compressor integrally bladed rotor or blade or vane. The component 50 can be an integrally bladed rotor in the high pressure compressor section 32 of the gas turbine engine 10. The turbine engine component 50 has an airfoil portion 52 with a tip 54.

The turbine engine component 50 may be formed from a titanium-based alloy or a nickel-based alloy. On the substrate tip 54 of the airfoil portion 52, a composite material 56 is applied for rub and abradability against an abradable coating (not shown). In an exemplary embodiment the composite material 56 can be a nickel-cubic boron nitride (Ni-CBN) material.

A diffusion barrier 58 can be coupled to the tip substrate 54 between the tip substrate 54 and the composite material 56. In an exemplary embodiment, the diffusion barrier 58 comprises an electrolytic nickel cobalt with a chromium aluminum yttria powder (Ni-Co with Cr-Al-Y) coating. In an exemplary embodiment, the diffusion barrier 58 including Ni-Co with Cr-Al-Y 58 can act as a bond coat.

There are grits 62 of CBN in the composite matrix material 56. The diffusion barrier 58 can help to secure the grits 62 to the tip substrate 54.

In an exemplary embodiment, the coating 56 can replace the traditional columnar structure of prior coating systems. In an exemplary embodiment, the coating 56 can replace the traditional unalloyed Ni of prior coating systems. The addition of alloying elements (esp. Al, Cr) to the diffusion barrier 58 reduces the chemical potential for diffusion of these elements from the blade tip 52. In addition, the addition of alloying elements to the diffusion barrier 58 results in oxidation of those elements in place, rather than diffusion and oxidation of elements from the blade tip 52 resulting in a network of mechanically weak oxides.

The inclusion of the Ni-Co with Cr-Al-Y eliminates the Cr diffusion from the nickel alloy substrate 54. In an exemplary embodiment, aluminum depletion occurs from the Cr-Al-Y thus forming AlOx layer under the grits 62.

In an exemplary embodiment, the diffusion barrier 58 can include a Ni-CBN tack layer 64 on top of the Ni-Co/Cr-Al-Y powder layer 66. A top coat 68 of Ni powder can be applied over the tack layer 64. A nickel strike layer 70 can be applied to the tip substrate 54.

A technical advantage of the diffusion barrier is that it prevents Cr, Al, and Ti depletion from the base alloy of the substrate.

Another technical advantage of the diffusion barrier includes formation of a very thin, uniform and homogenous oxidation layer (0.1 mil (2.54 µm)), that indicates a high corrosion/oxidation resistant property.

Another technical advantage of the diffusion barrier includes very low grain boundary oxidation.

Another technical advantage of the disclosed diffusion barrier includes prevention of the Ni super alloy depletion after engine operation.

Another technical advantage of the disclosed diffusion barrier includes elimination of potential mechanical strength reduction due to the depletion of the alloy chemistry.

Another technical advantage of the disclosed diffusion barrier includes extending the lifetime of the IBR used in the HPC section.

There has been provided a diffusion barrier. While the diffusion barrier has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A diffusion barrier coating on a nickel-based alloy substrate (54) comprising:
a diffusion barrier (58) coupled to the substrate (54) between the substrate (54) and a composite material (56) opposite the substrate (54), wherein the diffusion barrier (58) comprises a nickel cobalt and chromium-aluminum-yttria powder material (66).

2. The diffusion barrier coating on a substrate (54) according to claim 1, wherein said nickel cobalt and chromium-aluminum-yttria powder material (66) comprises a layered coating structure, and, optionally, the layered coating structure includes multiple layers.

3. The diffusion barrier coating on a substrate (54) according to claim 1 or 2, wherein said diffusion barrier (58) consists of plated layers.

4. The diffusion barrier coating on a substrate (54) according to claim 1, 2 or 3, wherein said composite material (56) comprises a nickel-cubic boron nitride material.

5. The diffusion barrier coating on a substrate (54) according to any preceding claim, wherein said diffusion barrier (58) comprises a bond coat between said substrate (54) and said composite material (56).

6. The diffusion barrier coating on a substrate (54) according to any preceding claim, wherein said diffusion barrier (58) comprises a nickel strike layer (70) between said substrate (54) and said diffusion barrier (58).

7. A gas turbine engine component (50) comprising:
a compressor integrally bladed rotor having a blade with an airfoil section (52) and a tip having a substrate (54);
a diffusion barrier (58) coupled to the substrate (54) between the substrate (54) and a composite material (56) opposite the substrate (54), wherein the diffusion barrier (58) comprises a nickel cobalt and chromium-aluminum-yttria powder material (66).

8. The gas turbine engine component (50) according to claim 7, wherein:
said nickel cobalt and chromium-aluminum-yttria powder material (66) comprises a bond layer; and/or
the diffusion barrier (58) includes multiple layers.

9. The gas turbine engine component (50) according to claim 7 or 8, wherein:
said diffusion barrier (58) comprises a nickel strike layer (70) between said substrate (54) and said diffusion barrier (58); and/or
said substrate (54) comprises a nickel-based alloy.

10. The gas turbine engine component (50) according to claim 7, 8 or 9, wherein said integrally bladed rotor is located in a high pressure compressor section (32) of a gas turbine engine (10) .

11. A process for diffusion inhibition in a nickel-based alloy substrate (54) of a gas turbine engine component (50) comprising:
applying a diffusion barrier (58) coupled to the substrate (54), wherein the diffusion barrier (58) comprises a nickel cobalt and chromium-aluminum-yttria powder material (66);
coating said diffusion barrier (58) with a matrix composite (56); and
subjecting said gas turbine engine component (50) with nickel-based alloy substrate (54) to at least one of a heat treatment and an engine operation.

12. The process of claim 11, wherein said a nickel cobalt and chromium-aluminum-yttria powder material (66) comprises a bond coat.

13. The process of claim 11 or 12, wherein:
the diffusion barrier (58) includes multiple layers; and/or
said diffusion barrier (58) comprises a nickel CBN tack layer (64).

14. The process of claim 11, 12 or 13, wherein said matrix composite material (56) comprises a nickel-cubic boron nitride material.

15. The process of any of claims 11 to 14, further comprising:
plating the diffusion barrier (58) in layers; and/or
preventing Cr, Al, and Ti depletion from the nickel-based alloy substrate (54) by reducing diffusion between said nickel-based alloy substrate (54) and said matrix composite (56) with said diffusion barrier (58).
